# EUROPÄISCHE PATENTSCHRIFT

(11) **EP 3 246 559 B1**
(45) Veröffentlichungstag und Bekanntmachung des Hinweises auf die Patenterteilung: **30.01.2019**
(21) Anmeldenummer: 17171460.3
(22) Anmeldetag: 17.05.2017
(51) Int. Cl.: F02K 9/64

(54) **RAKETENANTRIEBSSYSTEM UND VERFAHREN ZUM BETREIBEN EINES RAKETENANTRIEBSSYSTEMS**
ROCKET PROPULSION SYSTEM AND METHOD FOR OPERATING THE SAME
SYSTÈME DE PROPULSION DE FUSÉES ET SON PROCÉDÉ DE FONCTIONNEMENT

(30) Priorität: 20.05.2016 DE 102016208730
(43) Veröffentlichungstag der Anmeldung: 22.11.2017
(73) Patentinhaber: ArianeGroup GmbH, 82024 Taufkirchen (DE)
(72) Erfinder: Gotzig, Ulrich, 74177 Bad Friedrichshall (DE); Wurdak, Malte, 74219 Möckmühl (DE)
(74) Vertreter: Schicker, Silvia

(56) Entgegenhaltungen:
- CN-A- 102 192 046
- DE-A1-102010 034 848
- US-A- 4 841 723
- US-A1- 2009 288 390
- US-A1- 2010 107 602
- US-A1- 2012 060 464
- US-A1- 2014 260 186
- R Lacabucci ET AL: "N90'18482 SPACE STATION TECHNOLOGY SUMMARY", , 1. Mai 1989 (1989-05-01), XP055402894, Gefunden im Internet: URL:https://ntrs.nasa.gov/archive/nasa/cas i.ntrs.nasa.gov/19900009166.pdf [gefunden am 2017-08-31]

## Beschreibung

Die Erfindung betrifft ein Raketenantriebssystem und ein Verfahren zum Betreiben eines derartigen Raketenantriebssystems.

Mit Wasserstoff betriebene Raketentriebwerke beschreiben bekannte Antriebssysteme für Raumfahrzeuge. In derartigen Raketentriebwerken wird Wasserstoff mit Sauerstoff verbrannt und dadurch Schubkraft erzeugt. Anwendung finden diese Antriebssysteme beispielsweise bei den Trägerraketen der Ariane-Serie, in denen ein mit flüssigem Wasserstoff und flüssigem Sauerstoff betriebenes Raketenantriebssystem als Hauptstufe ausgebildet ist. Der Wasserstoff und der Sauerstoff werden in dafür vorgesehenen Wasserstoff- und Sauerstofftanks gespeichert.

Weiterhin sind sogenannte Wasserelektrolyse-Antriebssysteme bekannt, wie beispielsweise aus dem NASA Technical Memorandum 113157, die in Satelliten zum Einsatz kommen können. Bei einem derartigen Wasserelektrolyse-Antriebssystem wird Wasser durch Elektrolyse in Wasserstoff und Sauerstoff aufgespalten. Der so erzeugte Wasserstoff und Sauerstoff werden daraufhin zur Schubkrafterzeugung in einer Brennkammer eines Triebwerks verbrannt. Das durch Elektrolyse aufzuspaltende Wasser kann unter Raumtemperatur gespeichert werden, während flüssiger Wasserstoff bzw. flüssiger Sauerstoff unter tiefkalten Bedingungen gespeichert werden müssen. Dies erlaubt eine aufwandsreduzierte Speicherung des Wassers über eine gesamte Missionszeit von mehreren Jahren.

Durch die Verwendung von Wasserstoff als Treibstoff in einem Raketenantrieb kann eine hohe Energieausbeute und so ein hoher spezifischer Impuls des Raketenantriebs erreicht werden. Nachteil dieser hohen Energieausbeute ist jedoch, dass bei der Verbrennung von Wasserstoff hohe Verbrennungstemperaturen erzielt werden, die insbesondere bei einer stöchiometrischen Verbrennung von Wasserstoff zu einer hohen thermischen Belastung der in einem Raketenantrieb verwendeten Materialien führt. Dies ist insbesondere bei Wasserelektrolyse-Antriebssystemen problematisch, da hier Wasserstoff und Sauerstoff in einem stöchiometrischen Mischungsverhältnis erzeugt werden.

Um die Verbrennungstemperaturen in derartigen Systemen zu limitieren, wird üblicherweise ein unterstöchiometrisches Wasserstoff-Sauerstoff-Gemisch verbrannt, wie beispielsweise in dem NASA Technical Memorandum 105249 offenbart. Übrig bleibender Sauerstoff kann dann als Kaltgas verwendet und an eine Umgebung des Wasserelektrolyse-Antriebssystems abgegeben werden.
Der zu erzielende Wirkungsgrad und die Leistung derartiger Raketenantriebssysteme hängt im Wesentlich von dem Mischungsverhältnis von Sauerstoff zu Wasserstoff des in der Brennkammer zu entzündenden Wasserstoff-Sauerstoff-Gemischs ab.

US 4841723 offenbart ein Raketenantriebssystem des Stands der Technik. Der Erfindung liegt die Aufgabe zugrunde, ein Raketenantriebssystem und ein Verfahren zum Betreiben eines Raketenantriebssystems bereitzustellen, die eine Erhöhung der Leistung derartiger Raketenantriebssysteme bei einer geringeren thermischen Belastung ermöglichen.
Diese Aufgabe wird durch ein Raketenantriebssystem mit den Merkmalen des Anspruchs 1 und durch ein Verfahren zum Betreiben eines Raketenantriebssystems mit den Merkmalen des Anspruchs 11 gelöst.
Ein Raketenantriebssystem umfasst eine Brennkammer, die zur Verbrennung eines Treibstoff-Gemischs vorgesehen ist. Die Brennkammer kann mit einer Schubdüse zur Schubkrafterzeugung verbunden sein, der in der Brennkammer durch Verbrennung des Treibstoff-Gemischs erzeugten Abgase zugeführt werden. Die Schubdüse kann dafür vorgesehen sein, die in der Brennkammer erzeugten Abgase bei ihrem Austritt aus der Brennkammer bis zu einer Austrittsöffnung der Schubdüse zu beschleunigen und daraufhin an eine Umgebung des Raketenantriebssystems mit hohen Austrittsgeschwindigkeiten abzugeben.
Das Raketenantriebssystem ist dafür vorgesehen, ein Wasserstoff-Sauerstoff-Kühlmittel-Gemisch als Treibstoff-Gemisch zu verwenden, das in der Brennkammer zur Schubkrafterzeugung verbrannt wird. Zum Zuführen des Wasserstoff-Sauerstoff-Kühlmittel-Gemischs umfasst das Raketenantriebssystem ein mit der Brennkammer verbundenes Wasserstoff-Sauerstoff-Zufuhrsystem, das dazu eingerichtet ist, Wasserstoff und Sauerstoff in die Brennkammer zu leiten, und ein mit der Brennkammer verbundenes Kühlmittelzufuhrsystem, das dazu eingerichtet ist, ein brennbares Kühlmittel in die Brennkammer zu leiten. Ein Zündsystem des Raketenantriebssystems ist dazu eingerichtet, eine Verbrennung des Wasserstoff-Sauerstoff-Kühlmittel-Gemischs in der Brennkammer zu initiieren.

Indem ein Wasserstoff-Sauerstoff-Kühlmittel-Gemisch in der Brennkammer verbrannt wird, erreicht das Raketenantriebssystem einen höheren spezifischen Impuls bzw. eine höhere Leistung bei niedrigeren Verbrennungstemperaturen in der Brennkammer. Mit anderen Worten, im Vergleich zu bekannten Raketenantrieben, in denen ein unterstöchiometrisches Wasserstoff-Sauerstoff-Gemisch in der Brennkammer verbrannt wird, ermöglicht die vorliegende Erfindung durch die Verbrennung des Wasserstoff-Sauerstoff-Kühlmittel-Gemischs, dass zur Bereitstellung einer bestimmten Leistung bzw. eines bestimmten spezifischen Impulses niedrigere Verbrennungstemperaturen in der Brennkammer vorherrschen. So kann die thermische Belastung auf Raketenantriebskomponenten verringert werden, ohne die Leistung oder den spezifischen Impuls des Raketenantriebs dadurch zu reduzieren.

Das Kühlmittelzufuhrsystem ist vorzugsweise dazu eingerichtet, ein flüssiges Kühlmittel in die Brennkammer zu leiten. Das Kühlmittel kann einen flüssigen Brennstoff umfassen, insbesondere aus der Gruppe der Alkohole, wie zum Beispiel Methanol. Alternativ oder zusätzlich kann das Kühlmittel ein Flüssiggas, insbesondere aus der Gruppe der Alkane, wie zum Beispiel Ethan, Propan, etc., und/oder aus der Gruppe der Alkene, wie zum Beispiel, Ethen, Propen, etc., und/oder aus der Gruppe Alkine, wie zum Beispiel Ethin, Propin, etc., enthalten.

Das Kühlmittel kann derart in die Brennkammer eingeleitet werden, dass das Kühlmittel einen reaktiven Kühlfilm bildet, insbesondere entlang einer Innenfläche einer Brennkammerwand. Mit anderen Worten, das Kühlmittel kann im Betrieb des Raketenantriebssystems einen oxidatorarmen Kühlfilm vor der Brennkammerwand ausbilden. Dies hat den Effekt, dass entlang der Brennkammerwand reduktive Bedingungen vorherrschen können und so eine Reaktion der Brennkammerwand mit Sauerstoff verhindert werden kann. Gleichzeitig können dadurch im Betrieb des Raketenantriebssystems im Bereich der Brennkammerwand geringere Verbrennungstemperaturen erreicht werden. Das Kühlmittelzufuhrsystem kann derart bereitgestellt sein, dass das in die Brennkammer zu leitende Kühlmittel einen Kühlfilm ausbildet, der einen ein Wasserstoff-Sauerstoff-Gemisch, insbesondere ein sauerstoffreiches oder stöchiometrisches Wasserstoff-Sauerstoff-Gemisch, enthaltenden Gaskern in der Brennkammer umschließt. Im Bereich des Gaskerns können so lokal in der Brennkammer höhere Verbrennungstemperaturen erreicht werden. Durch den den Gaskern umschließenden Kühlfilm kann eine Wärmeisolierung zwischen dem hohe Verbrennungstemperaturen aufweisenden Gaskern und der Brennkammerwand bereitgestellt werden. So kann die thermische Belastung auf die Brennkammerwand während des Betriebs des Raketenantriebssystems verringert werden.

Das hier vorgeschlagene Raketenantriebssystem ermöglicht, dass höhere Verbrennungstemperaturen in der Brennkammer erreicht werden können, ohne dadurch eine zulässige thermische Belastung der in der Brennkammer zum Einsatz kommenden Materialien zu überschreiten. Entsprechend kann ein Treibstoff-Gemisch mit einem höheren Mischungsverhältnis von Sauerstoff zu Wasserstoff verbrannt und so ein höherer Wirkungsgrad des Raketenantriebssystems erreicht werden.

Das Wasserstoff-Sauerstoff-Zufuhrsystem kann dazu eingerichtet sein, Wasserstoff und Sauerstoff in einem insgesamt stöchiometrischen Mischungsverhältnis in die Brennkammer zu leiten.

In einer Weiterentwicklung kann das Wasserstoff-Sauerstoff-Zufuhrsystem eine Elektrolyseeinheit umfassen, die dazu eingerichtet ist, aus einem Wasserspeicher über eine Wasserleitung in die Elektrolyseeinheit zugeführtes Wasser durch Elektrolyse in Wasserstoff und Sauerstoff aufzuspalten. Entsprechend kann Wasserstoff und Sauerstoff in einem stöchiometrischen Verhältnis in dem Wasserstoff-Sauerstoff-Zufuhrsystem erzeugt und in die Brennkammer geleitet werden. Der in der Elektrolyseeinheit erzeugte Wasserstoff kann in die Brennkammer über eine Wasserstoffleitung des Wasserstoff-Sauerstoff-Zufuhrsystems geleitet werden. Weiterhin kann das Wasserstoff-Sauerstoff-Zufuhrsystem eine Sauerstoffleitung umfassen, die dazu eingerichtet ist, den in der Elektrolyseeinheit erzeugten Sauerstoff in die Brennkammer zu leiten.

Das Wasserstoff-Sauerstoff-Zufuhrsystem kann einen mit der Wasserstoffleitung verbundenen Wasserstoffspeicher zum Speichern des in der Elektrolyseeinheit erzeugten Wasserstoffs aufweisen. Eine Wasserstoffzufuhrleitung des Wasserstoff-Sauerstoff-Zufuhrsystems kann dazu eingerichtet sein, den Wasserstoff aus dem Wasserstoffspeicher in die Brennkammer zu leiten. In der Wasserstoffzufuhrleitung kann ein Wasserstoffzufuhrventil bereitgestellt sein, das zur Steuerung einer Wasserstoffzufuhr in die Brennkammer eingerichtet sein kann. Weiterhin kann das Wasserstoff-Sauerstoff-Zufuhrsystem einen mit der Sauerstoffleitung verbundenen Sauerstoffspeicher enthalten, der dazu eingerichtet sein kann, den in der Elektrolyseeinheit erzeugten Sauerstoff zu speichern. Eine Sauerstoffzufuhrleitung des Wasserstoff-Sauerstoff-Zufuhrsystems kann dazu eingerichtet sein, den Sauerstoff aus dem Sauerstoffspeicher in die Brennkammer zu leiten. In der Sauerstoffzufuhrleitung kann ein Sauerstoffzufuhrventil bereitgestellt sein, das zur Steuerung einer Sauerstoffzufuhr in die Brennkammer eingerichtet sein kann.

Alternativ oder zusätzlich kann das Wasserstoff-Sauerstoff-Zufuhrsystem einen Wasserstoff-Sauerstoff-Gemisch-Speicher zur Speicherung eines Wasserstoff-Sauerstoff-Gemischs aufweisen. Der Wasserstoff-Sauerstoff-Gemisch-Speicher kann mit der Elektrolyseeinheit über die Sauerstoffleitung und die Wasserstoffleitung verbunden und dazu eingerichtet sein, den in der Elektrolyseeinheit erzeugten Wasserstoff und Sauerstoff in Form des Wasserstoff-Sauerstoff-Gemischs zu speichern. Das Wasserstoff-Sauerstoff-Zufuhrsystem kann weiterhin eine Wasserstoff-Sauerstoff-Gemisch-Leitung umfassen, die dazu eingerichtet sein kann, dass Wasserstoff-Sauerstoff-Gemisch aus dem Wasserstoff-Sauerstoff-Gemisch-Speicher in die Brennkammer zu leiten. In der Wasserstoff-Sauerstoff-Gemisch-Leitung kann ein Wasserstoff-Sauerstoff-Gemisch-Zufuhrventil bereitgestellt sein, das zur Steuerung einer Wasserstoff-Sauerstoff-Gemisch-Zufuhr in die Brennkammer eingerichtet sein kann.

Durch die Bereitstellung des Wasserstoff-Sauerstoff-Gemisch-Speichers können der in die Brennkammer einzuleitende Wasserstoff und Sauerstoff in einem gemeinsamen Speicher gespeichert werden. Gegenüber bekannten Vorrichtungen mit separaten Wasserstoff- und Sauerstoffspeichern kann das hier beschriebene Raketenantriebssystem einen einfacheren Aufbau und ein geringeres Gewicht aufweisen.

Das Kühlmittelzufuhrsystem ist dazu eingerichtet, das Kühlmittel in die Brennkammer zu leiten, um das Wasserstoff-Sauerstoff-Kühlmittel-Gemisch zu bilden. In einer Weiterentwicklung kann das Kühlmittelsystem einen Kühlmittelspeicher zum Speichern des Kühlmittels umfassen. Eine Kühlmittelleitung des Kühlmittelzufuhrsystems kann dazu eingerichtet sein, das Kühlmittel aus dem Kühlmittelspeicher in die Brennkammer zu leiten. In der Kühlmittelleitung kann ein Kühlmittelzufuhrventil des Kühlmittelzufuhrsystems bereitgestellt sein, das zur Steuerung einer Kühlmittelzufuhr in die Brennkammer eingerichtet sein kann.

Der Kühlmittelspeicher des Kühlmittelzufuhrsystems kann mit dem Wasserspeicher des Wasserstoff-Sauerstoff-Zufuhrsystems in einem gemeinsamen Behälter angeordnet sein. Insbesondere können der Kühlmittelspeicher des Kühlmittelzufuhrsystems und der Wasserspeicher des Wasserstoff-Sauerstoff-Zufuhrsystems in getrennten Bereichen eines Diaphragmatanks vorgesehen sein, wobei der den Kühlmittelspeicher bildende Bereich des Diaphragmatanks, in dem das Kühlmittel mit Druck gespeichert sein kann, den den Wasserspeicher bildenden anderen Bereich des Diaphragmatanks mit Druck beaufschlagen kann. Die Bedrückung kann durch den natürlichen Dampfdruck des Kühlmittels erfolgen. Dies hat den Effekt, dass keine zusätzlichen Fördermittel zum Bedrücken und Fördern des Wassers oder des Kühlmittels benötigt werden.
Zum Initiieren der Verbrennung des in die Brennkammer eingeleiteten Wasserstoff-Sauerstoff-Kühlmittel-Gemischs ist das Zündsystem in dem Raketenantriebssystem bereitgestellt. Das Zündsystem des Raketenantriebssystems umfasst eine in der Brennkammer angeordnete Katalysatorkammer, einen Wasserstoffzufuhrkanal und einen Sauerstoffzufuhrkanal. Das Zündsystem kann derart eingerichtet sein, dass der Katalysatorkammer über den Wasserstoffzufuhrkanal und den Sauerstoffzufuhrkanal Wasserstoff und Sauerstoff insbesondere in einem unterstöchiometrischen Mischungsverhältnis von Sauerstoff zu Wasserstoff zuführbar sind.
Die Katalysatorkammer ist vorzugsweise dazu eingerichtet, eine Verbrennung des in die Katalysatorkammer eingeleiteten Wasserstoff-Sauerstoff-Gemischs mittels eines Katalysators zu initiieren. Mit anderen Worten, die Katalysatorkammer des Zündsystems kann einen Strömungsabschnitt des Wasserstoff-Sauerstoff-Gemischs ausbilden, in dem mittels eines Katalysators die Aktivierungsenergie zur Initiierung der Verbrennung des der Katalysatorkammer zugeführten Wasserstoff-Sauerstoff-Gemischs herabgesetzt ist. Da das in die Katalysatorkammer eingeleitete Wasserstoff-Sauerstoff-Gemisch vorzugsweise ein unterstöchiometrisches Mischungsverhältnis von Sauerstoff zu Wasserstoff aufweist, können die aus der Katalysatorkammer austretenden Gase nicht verbrannten Wasserstoff umfassen.
In einer Weiterentwicklung kann die Katalysatorkammer einen Flammenrückschlagverhinderer umfassen, der dazu eingerichtet sein kann, eine Zündung des in dem Wasserstoffzufuhrkanal und dem Sauerstoffzufuhrkanal strömenden Wasserstoffs und Sauerstoffs zu verhindern. Der Flammenrückschlagverhinderer kann im Bereich einer Eingangsfläche der Katalysatorkammer angeordnet sein, über die der Katalysatorkammer Wasserstoff und Sauerstoff zugeführt werden kann.
Stromabwärts einer Ausgangsfläche der Katalysatorkammer kann ein Gesamtverbrennungsabschnitt in der Brennkammer vorgesehen sein. Der Begriff "stromabwärts" bezieht sich hier auf die Richtung der aus der Katalysatorkammer austretenden Gase. Dem Gesamtverbrennungsabschnitt in der Brennkammer können die aus der Katalysatorkammer austretenden Gase, die insbesondere nicht verbrannten Wasserstoff umfassen können, den Sauerstoffzufuhrkanal durchströmender Sauerstoff und/oder über das Kühlmittelzufuhrsystem in die Brennkammer eingeleitetes Kühlmittel zugeführt werden, die das Wasserstoff-Sauerstoff-Kühlfilm-Gemisch bilden können. Die Katalysatorkammer ist vorzugsweise derart ausgebildet, dass die in den Gesamtverbrennungsabschnitt aus der Katalysatorkammer austretenden Gase eine Temperatur aufweisen, die zur Initiierung der Verbrennung des in der Brennkammer eingeleiteten Wasserstoff-Sauerstoff-Kühlfilm-Gemischs ausreichend ist.

Der Wasserstoffzufuhrkanal kann dazu eingerichtet sein, den der Brennkammer zugeführten Wasserstoff in die Katalysatorkammer und/oder den Gesamtverbrennungsabschnitt in der Brennkammer zu leiten. Der Wasserstoffzufuhrkanal kann im Wesentlichen senkrecht zu der Eingangsfläche der Katalysatorkammer verlaufen und insbesondere im Bereich der Eingangsfläche der Katalysatorkammer in die Katalysatorkammer münden.

Der Sauerstoffzufuhrkanal kann dafür vorgesehen sein, den der Brennkammer zugeführten Sauerstoff in die Katalysatorkammer und/oder den Gesamtverbrennungsabschnitt in der Brennkammer zu leiten. Zur Bildung des Wasserstoff-Sauerstoff-Kühlfilm-Gemischs in dem Gesamtverbrennungsabschnitt kann der Sauerstoffzufuhrkanal unmittelbar mit dem Gesamtverbrennungsabschnitt verbunden sein und insbesondere in den Gesamtverbrennungsabschnitt münden. Der Sauerstoffzufuhrkanal erstreckt sich vorzugsweise entlang einer dem Sauerstoffzufuhrkanal zugewandten Katalysatorkammerwand. Dies hat den Effekt, dass entlang der Katalysatorkammerwand strömender Sauerstoff sich erwärmen und so die Katalysatorkammer kühlen kann.

Der Sauerstoffzufuhrkanal kann weiterhin mit einer Sauerstoffzufuhröffnung versehen sein, die in der dem Sauerstoffzufuhrkanal zugewandten Katalysatorkammerwand ausgebildet sein kann. Über die Sauerstoffzufuhröffnung kann der Sauerstoffzufuhrkanal mit der Katalysatorkammer verbunden sein. Die Sauerstoffzufuhröffnung kann dazu eingerichtet sein, Sauerstoff in die Katalysatorkammer einzuleiten. Vorzugsweise ist die Sauerstoffzufuhröffnung in einem Bereich der Eingangsfläche der Katalysatorkammer ausgebildet.

Das Zündsystem kann weiterhin eine Vormischkammer umfassen, die stromaufwärts, d.h. entgegen der Richtung der in die Katalysatorkammer strömenden Gase, an der Katalysatorkammer angebracht sein kann und im Bereich der Eingangsfläche der Katalysatorkammer in die Katalysatorkammer münden kann. Der Vormischkammer können die Sauerstoffzufuhröffnung durchströmender Sauerstoff und den Wasserstoffzufuhrkanal durchströmender Wasserstoff zugeführt werden. Die Vormischkammer kann dazu eingerichtet sein, den die Sauerstoffzufuhröffnung durchströmenden Sauerstoff und den den Wasserstoffzufuhrkanal durchströmenden Wasserstoff miteinander zu vermischen, um das in die Katalysatorkammer einzuleitende Wasserstoff-Sauerstoff-Gemisch zu erzeugen.

Ein Endabschnitt des Wasserstoffzufuhrkanals kann einen die Vormischkammer bereitstellenden Vormischkammerabschnitt ausbilden, wobei der Vormischkammerabschnitt im Bereich der Eingangsfläche der Katalysatorkammer in die Katalysatorkammer mündet. Die Sauerstoffzufuhröffnung kann in einer dem Sauerstoffzufuhrkanal zugewandten Wasserstoffzufuhrkanalwand in dem Vormischkammerabschnitt ausgebildet sein. Die Vormischkammer kann einen sich in Strömungsrichtung größer werdenden Strömungsquerschnitt aufweisen. So kann das die Vormischkammer durchströmende Wasserstoff-Sauerstoff-Gemisch entspannt und gebremst werden, was zu einer verbesserten Vermischung des Wasserstoff-Sauerstoff-Gemischs führen kann.

In einer Ausführungsform kann der Sauerstoffzufuhrkanal einen Querschnitt, insbesondere einen Strömungsquerschnitt umfassen, der von der Katalysatorkammer durchsetzt sein kann. Der Querschnitt des Sauerstoffzufuhrkanals kann als ringförmiger Querschnitt ausgebildet sein. Weiterhin kann der Querschnitt des Sauerstoffzufuhrkanals als Hohlquerschnitt mit einer äußeren Kontur und einer inneren Kontur ausgebildet sein, wobei die äußere Kontur und/oder innere Kontur als Kontur eines Polygons, eines Kreises und/oder einer Ellipse ausgebildet sein können/kann.

In einer weiteren Ausführungsform kann die Katalysatorkammer einen Querschnitt, insbesondere einen Strömungsquerschnitt, aufweisen, der von dem Sauerstoffzufuhrkanal durchsetzt sein kann. Der Querschnitt der Katalysatorkammer kann als ringförmiger Querschnitt ausgebildet sein. Weiterhin kann der Querschnitt der Katalysatorkammer als Hohlquerschnitt mit einer äußeren Kontur und einer inneren Kontur ausgebildet sein, wobei die äußere Kontur und/oder innere Kontur als Kontur eines Polygons, eines Kreises und/oder einer Ellipse ausgebildet sein können/kann.

Um das der Brennkammer über das Kühlmittelzufuhrsystem zugeführte Kühlmittel in den Gesamtverbrennungsabschnitt zu leiten, kann das Raketenantriebsystem einen Kühlmittelkanal umfassen. Hierzu kann der Kühlmittelkanal in den stromabwärts der Ausgangsfläche der Katalysatorkammer angeordneten Gesamtverbrennungsabschnitt münden. Der Kühlmittelkanal kann dazu eingerichtet sein, Kühlmittel entlang einer Außenfläche des Zündsystems in den Gesamtverbrennungsabschnitt zu leiten. Dadurch kann eine Kühlfunktion zur Kühlung des Zündsystems bereitgestellt werden, um die durch Verbrennung des Wasserstoff-Sauerstoff-Gemischs in der Katalysatorkammer induzierten Wärmeeintragung aus der Katalysatorkammer abzuführen.

Der Kühlmittelkanal kann zwischen der Außenfläche des Zündsystems und einer Innenfläche der Brennkammer angeordnet sein. Die Außenfläche des Zündsystems kann durch eine dem Kühlmittelkanal zugewandte Außenfläche der Katalysatorkammer gebildet sein. Alternativ kann die Außenfläche des Zündsystems durch eine dem Kühlmittelkanal zugewandte Außenfläche des Sauerstoffzufuhrkanals gebildet sein.

In einer Weiterentwicklung kann der Kühlmittelkanal in Form eines zwischen der Außenfläche des Zündsystems und der Innenfläche der Brennkammer definierten Ringspalts ausgebildet sein. Alternativ kann der Kühlmittelkanal eine Mehrzahl von Kühlmitteleinzelleitungen umfassen, die sich zwischen der Außenfläche des Zündsystems und der Innenfläche der Brennkammer erstrecken.

In einer alternativen Ausführungsform des Raketenantriebssystems kann das Zündsystem einen Zünder und mindestens einen Zufuhrkanal zur Zufuhr von Wasserstoff und Sauerstoff in einen Gemischverbrennungsabschnitt der Brennkammer umfassen. Der Gemischverbrennungsabschnitt kann stromabwärts des Zufuhrkanals ausgebildet sein. Der Begriff "stromabwärts bezieht sich hier auf eine Richtung der Strömung des Wasserstoff-Sauerstoffgemischs in der Zufuhrleitung. Der mindestens eine Zufuhrkanal kann insbesondere im Wesentlichen senkrecht zu einer Eingangsfläche des Gemischverbrennungsabschnitts verlaufen und im Bereich der Eingangsfläche des Gemischverbrennungsabschnitts in den Gemischverbrennungsabschnitt münden. Weiterhin kann der mindestens eine Zufuhrkanal derart ausgebildet sein, dass dieser den Zünder umgibt.

Ein Kühlmittelzufuhrkanal des Raketenantriebssystems kann dazu eingerichtet sein, das der Brennkammer mittels des Kühlmittelzufuhrsystems zugeführte Kühlmittel in den Gemischverbrennungsabschnitt zu leiten. Der Kühlmittelzufuhrkanal kann im Wesentlichen senkrecht zu der Eingangsfläche des Gemischverbrennungsabschnitts verlaufen. Weiterhin kann der Kühlmittelzufuhrkanal im Bereich der Eingangsfläche des Gemischverbrennungsabschnitts in den Gemischverbrennungsabschnitt münden. Alternativ oder zusätzlich kann der Kühlmittelzufuhrkanal zwischen einer Außenfläche des Zündsystems und einer Innenfläche der Brennkammer angeordnet sein.

Ein Verfahren zum Betreiben eines Raketenantriebssystems umfasst einen Schritt des Leitens von Wasserstoff und Sauerstoff in eine Brennkammer. Ferner wird ein brennbares Kühlmittel in die Brennkammer geleitet. Das Verfahren umfasst weiterhin einen Schritt des Initiierens einer Verbrennung des Wasserstoff-Sauerstoff-Kühlmittel-Gemischs in der Brennkammer.

Bevorzugte Ausführungsformen der Erfindung werden im Folgenden anhand der beigefügten schematischen Zeichnungen näher erläutert, wobei
- Fig. 1: ein Diagramm zeigt, das den Zusammenhang zwischen einer Verbrennungstemperatur in einer Brennkammer und einem spezifischen Impuls eines Raketenantriebssystems für ein erfindungsgemäßes Raketenantriebssystem und ein aus dem Stand der Technik bekannten Raketenantriebssystem veranschaulicht,
- Fig. 2: eine schematische Ansicht eines Raketenantriebssystems einer ersten Ausführungsform zeigt,
- Fig. 3: einen vergrößerten Längsschnitt einer in Fig. 2 gezeigten Brennkammer des Raketenantriebssystems der ersten Ausführungsform zeigt,
- Fig. 4: einen vergrößerten Längsschnitt der in Fig. 2 gezeigten Brennkammer eines Raketenantriebssystems einer zweiten Ausführungsform zeigt,
- Fig. 5: eine dem Verständnis der Erfindung dienende schematische Ansicht eines Raketenantriebssystems zeigt,
- Fig. 6: einen vergrößerten Längsschnitt der in Fig. 5 gezeigten Brennkammer des Raketenantriebssystems zeigt.

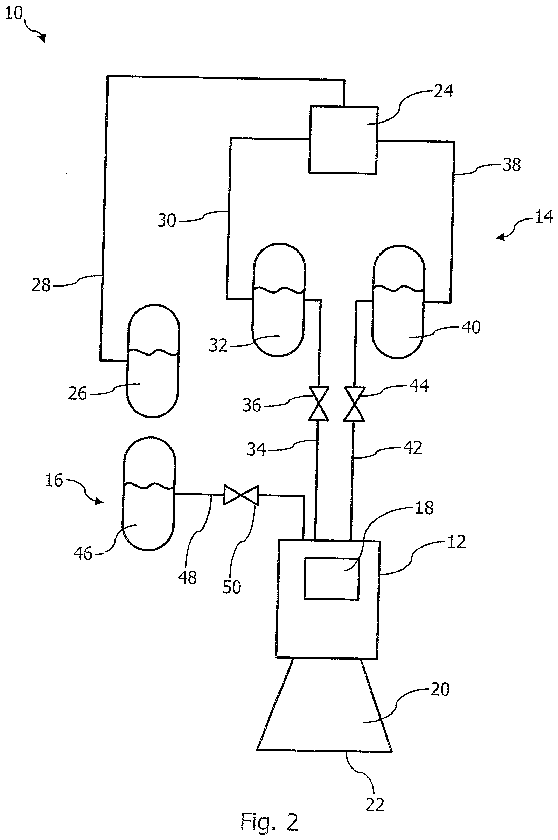

Fig. 2 zeigt eine erste Ausführungsform eines Raketenantriebssystems 10, das eine Brennkammer 12, ein mit der Brennkammer 12 verbundenes Wasserstoff-Sauerstoff-Zufuhrsystem 14 und ein mit der Brennkammer 12 verbundenes Kühlmittelzufuhrsystem 16 umfasst. Das Wasserstoff-Sauerstoff-Zufuhrsystem 14 ist dazu eingerichtet, Wasserstoff und Sauerstoff in die Brennkammer 12 zu leiten. Das Kühlmittelzufuhrsystem 16 ist dazu eingerichtet, ein brennbares Kühlmittel in die Brennkammer 12 zu leiten.

Das Raketenantriebssystem 10 umfasst weiterhin ein in der Brennkammer 12 angeordnetes Zündsystem 18, das dazu eingerichtet ist, eine Verbrennung des Wasserstoff-Sauerstoff-Kühlmittel-Gemischs in der Brennkammer 12 zu initiieren, wobei das Wasserstoff-Sauerstoff-Kühlmittel-Gemisch durch den in die Brennkammer 12 eingeleiteten Wasserstoff und Sauerstoff sowie das in die Brennkammer 12 eingeleitete Kühlmittel gebildet wird.

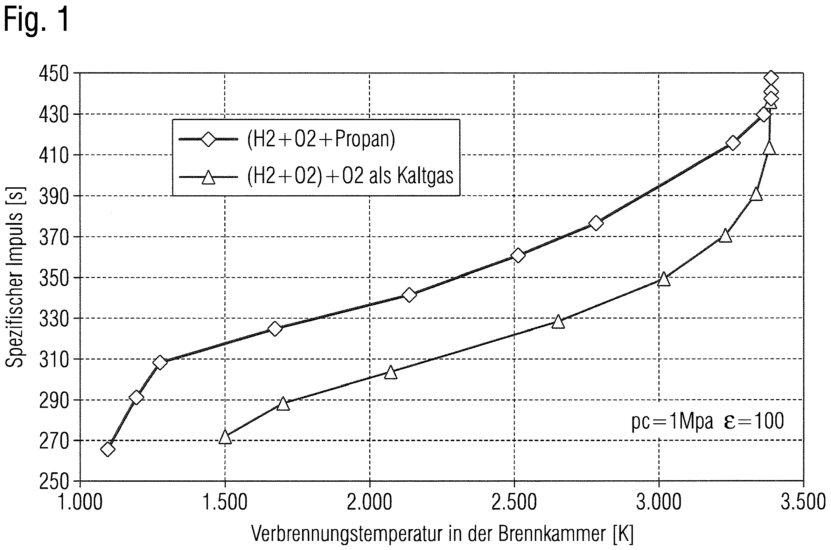

Indem ein Wasserstoff-Sauerstoff-Kühlmittel-Gemisch in der Brennkammer 12 verbrannt wird, erreicht das Raketenantriebssystem 10 einen höheren spezifischen Impuls bzw. eine höhere Leistung bei niedrigeren Verbrennungstemperaturen in der Brennkammer. Dieser Zusammenhang zwischen der Verbrennungstemperatur in der Brennkammer 12 und dem spezifischen Impuls des Raketenantriebssystems 10 ist in Fig. 1 gezeigt, die den spezifischen Impuls als Funktion der Verbrennungstemperatur in der Brennkammer 12 für das Raketenantriebssystem 10 mit einem gegenwärtig bekannten Raketenantriebssystem in einem Diagramm vergleicht. Die Abszisse des Diagramms zeigt die Verbrennungstemperatur und die Ordinate des Diagramms den spezifischen Impuls bei einem Brennkammerdruck von pc = 1 Mpa und einem Expansionsverhältnis von ε = 100. In dem Diagramm ist eine erste Kurve gezeigt, die eine Ausführungsform des Raketenantriebssystems 10 beschreibt, in dem Propan als Kühlmittel eingesetzt wird, so dass ein Wasserstoff-Sauerstoff-Propan-Gemisch in der Brennkammer 12 verbrannt wird. Eine zweite Kurve veranschaulicht ein aus dem Stand der Technik bekanntes Raketenantriebssystem, bei dem ein unterstöchiometrisches Wasserstoff-Sauerstoff-Gemisch in einer Brennkammer verbrannt wird und der übrig bleibende Sauerstoff als Kaltgas abgegeben wird.

Die Brennkammer 12 des Raketenantriebssystems 10 ist mit einer Schubdüse 20 verbunden, der die in der Brennkammer 12 durch Verbrennung des Wasserstoff-Sauerstoff-Kühlmittel-Gemischs entstehenden Abgase zugeführt werden. Die Schubdüse 20 ist dafür vorgesehen, die in der Brennkammer 12 erzeugten Abgase bei ihrem Austritt aus der Brennkammer 12 bis zu einer Austrittsöffnung 22 der Schubdüse 20 zu beschleunigen und daraufhin an eine Umgebung des Raketenantriebssystems 10 mit hoher Austrittsgeschwindigkeit abzugeben, um eine Schubkraft zu erzeugen.

Das hier gezeigte Kühlmittelzufuhrsystem 16 ist dazu eingerichtet, einen flüssigen Brennstoff und/oder ein Flüssiggas als Kühlmittel in die Brennkammer 12 zu leiten.

Das Wasserstoff-Sauerstoff-Zufuhrsystem 14 umfasst eine Elektrolyseeinheit 24, die dazu eingerichtet ist, aus einem Wasserspeicher 26 über eine Wasserleitung 28 in die Elektrolyseeinheit 24 zugeführtes Wasser durch Elektrolyse in Wasserstoff und Sauerstoff aufzuspalten. Eine Wasserstoffleitung 30 des Wasserstoff-Sauerstoff-Zufuhrsystems 14 ist dazu eingerichtet, den in der Elektrolyseeinheit 24 erzeugten Wasserstoff in die Brennkammer 12 zu leiten. Die Wasserstoffleitung 30 ist mit einem Wasserstoffspeicher 32 verbunden, der dazu eingerichtet ist, den in der Elektrolyseeinheit 24 erzeugten Wasserstoff zu speichern, bevor dieser über eine Wasserstoffzufuhrleitung 34 in die Brennkammer 12 geleitet wird. In der Wasserstoffzufuhrleitung 34 ist ein Wasserstoffzufuhrventil 36 bereitgestellt, das zur Steuerung einer Wasserstoffzufuhr in die Brennkammer 12 eingerichtet ist.

Eine Sauerstoffleitung 38 des Wasserstoff-Sauerstoff-Zufuhrsystems 14 ist dazu eingerichtet, den in der Elektrolyseeinheit 24 erzeugten Sauerstoff in die Brennkammer 12 zu leiten. Die Sauerstoffleitung 38 ist mit einem Sauerstoffspeicher 40 verbunden, der dazu eingerichtet ist, den in der Elektrolyseeinheit 24 erzeugten Sauerstoff zu speichern, bevor dieser über eine Sauerstoffzufuhrleitung 42 in die Brennkammer 12 geleitet wird. In der Sauerstoffzufuhrleitung 42 ist ein Sauerstoffzufuhrventil 44 bereitgestellt, das zur Steuerung einer Sauerstoffzufuhr in die Brennkammer 12 eingerichtet ist.

Das Wasserstoff-Sauerstoff-Zufuhrsystem 14 ist vorzugsweise dazu eingerichtet, Wasserstoff und Sauerstoff in einem im Wesentlichen stöchiometrischen Mischungsverhältnis zu erzeugen und in die Brennkammer 12 zu leiten.

Das Kühlmittelzufuhrsystem 16 umfasst einen Kühlmittelspeicher 46 zum Speichern des Kühlmittels und eine mit dem Kühlmittelspeicher 46 verbundene Kühlmittelleitung 48, über die das Kühlmittel in die Brennkammer 12 zuführbar ist. In der Kühlmittelleitung 48 ist ein Kühlmittelzufuhrventil 50 bereitgestellt, das zur Steuerung einer Kühlmittelzufuhr in die Brennkammer 12 eingerichtet ist.

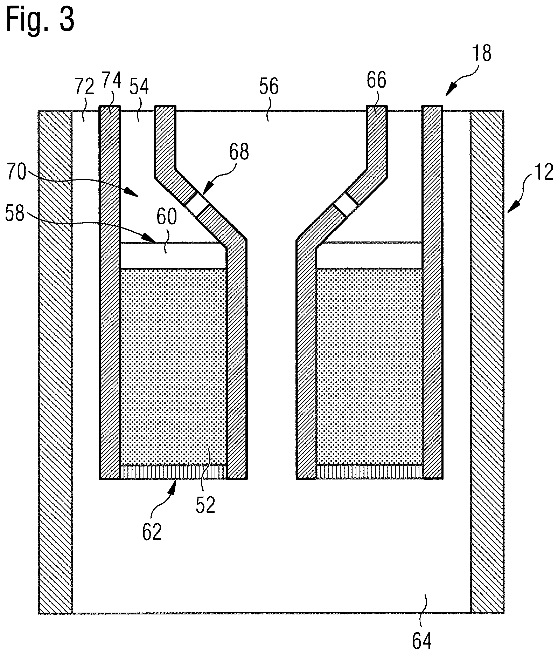

Fig. 3 zeigt einen vergrößerten Längsschnitt der in Fig. 2 gezeigten Brennkammer 12 mit dem darin angeordneten Zündsystem 18. Das Zündsystem 18 umfasst eine in der Brennkammer 12 angeordnete Katalysatorkammer 52, einen Wasserstoffzufuhrkanal 54 und einen Sauerstoffzufuhrkanal 56. Das Zündsystem 18 ist dazu eingerichtet, der Katalysatorkammer 52 über den Wasserstoffzufuhrkanal 54 und den Sauerstoffzufuhrkanal 56 Wasserstoff und Sauerstoff insbesondere in einem unterstöchiometrischen Mischungsverhältnis zuzuführen. Die Katalysatorkammer 52 ist dazu eingerichtet, eine Verbrennung des in die Katalysatorkammer 52 eingeleiteten Wasserstoff-Sauerstoff-Gemischs mittels eines Katalysators zu initiieren. Im Bereich einer Eingangsfläche 58 der Katalysatorkammer 52 umfasst die Katalysatorkammer 52 einen Flammenrückschlagverhinderer 60. Die aus der Katalysatorkammer 52 austretenden Gase werden über eine Ausgangsfläche 62 der Katalysatorkammer 52 einem Gesamtverbrennungsabschnitt 64 in der Brennkammer 12 zugeführt, der stromabwärts der Ausgangsfläche 62 der Katalysatorkammer 52 angeordnet ist. Der Gesamtverbrennungsabschnitt 64 ist derart ausgebildet, dass diesem die aus der Katalysatorkammer 52 austretenden Gase, den Sauerstoffzufuhrkanal 56 durchströmender Sauerstoff und über das Kühlmittelzufuhrsystem 18 in die Brennkammer 12 zugeführtes Kühlmittel zuführbar sind. Da das in die Katalysatorkammer 52 eingeleitete Wasserstoff-Sauerstoff-Gemisch vorzugsweise ein unterstöchiometrisches Mischungsverhältnis von Sauerstoff zu Wasserstoff aufweist, umfassen die aus der Katalysatorkammer 52 austretenden Gase nicht verbrannten Wasserstoff. Entsprechend bilden die in den Gesamtverbrennungsabschnitt 64 zugeführten Gase das Wasserstoff-Sauerstoff-Kühlmittel-Gemisch.

Die Katalysatorkammer 52 ist vorzugsweise derart ausgebildet, dass die in den Gesamtverbrennungsabschnitt 64 aus der Katalysatorkammer 52 austretenden Gase eine Temperatur aufweisen, die zur Initiierung der Verbrennung des in die Brennkammer 12 eingeleiteten Wasserstoff-Sauerstoff-Kühlmittel-Gemischs ausreichend ist.

Der Wasserstoffzufuhrkanal 54 ist dazu eingerichtet, den der Brennkammer 12 zugeführten Wasserstoff in die Katalysatorkammer 52 zu leiten. Der Wasserstoffzufuhrkanal 54 verläuft im Wesentlichen senkrecht zu der Eingangsfläche 58 der Katalysatorkammer 52 und mündet im Bereich der Eingangsfläche 58 der Katalysatorkammer 52 in die Katalysatorkammer 52.

Der Sauerstoffzufuhrkanal 56 ist dazu eingerichtet, den der Brennkammer 12 zugeführten Sauerstoff in die Katalysatorkammer 52 und den Gesamtverbrennungsabschnitt 64 in der Brennkammer 12 zu leiten. Weiterhin erstreckt sich der Sauerstoffzufuhrkanal 56 entlang einer dem Sauerstoffzufuhrkanal 56 zugewandten inneren Katalysatorkammerwand 66, wobei der Sauerstoffzufuhrkanal 56 über eine Sauerstoffzufuhröffnung 68, die in der dem Sauerstoffzufuhrkanal 56 zugewandten inneren Katalysatorkammerwand 66 ausgebildet ist, mit der Katalysatorkammer 52 verbunden. Die Sauerstoffzufuhröffnung 68 ist im Bereich der Eingangsfläche 58 der Katalysatorkammer 52 ausgebildet und ist dazu eingerichtet, Sauerstoff in die Katalysatorkammer 52 zu leiten. Zur Leitung von Sauerstoff in den Gesamtverbrennungsabschnitt 64, mündet der Sauerstoffzufuhrkanal 56 weiterhin in den Gesamtverbrennungsabschnitt 64.

Ein in die Katalysatorkammer 52 mündender Endabschnitt des Wasserstoffzufuhrkanals 54 ist als ein Vormischkammerabschnitt 70 ausgebildet, in den die Sauerstoffzufuhröffnung 68 mündet. Der Vormischkammerabschnitt 70 ist dazu eingerichtet, den die Sauerstoffzufuhröffnung 68 durchströmenden Sauerstoff und den den Wasserstoffzufuhrkanal 54 durchströmenden Wasserstoff miteinander zu vermischen und so das in die Katalysatorkammer 52 einzuleitende Wasserstoff-Sauerstoff-Gemisch zu erzeugen. Der Vormischkammerabschnitt 70 weist einen in Richtung der Katalysatorkammer 52 sich aufweitenden Strömungsquerschnitt auf.

In der hier gezeigten Ausführungsform des Raketenantriebssystems 10 hat die Katalysatorkammer 52 einen ringförmigen Querschnitt, der von dem Sauerstoffzufuhrkanal 56 durchsetzt ist, wobei der Sauerstoffzufuhrkanal 56 einen kreisförmigen Querschnitt aufweist.

Das Raketenantriebssystem 10 umfasst weiterhin einen Kühlmittelkanal 72, der dazu eingerichtet ist, dass der Brennkammer 12 zugeführte Kühlmittel in den Gesamtverbrennungsabschnitt 64 zu leiten. Der Kühlmittelkanal 72 ist zwischen einer Außenfläche des Zündsystems 18 und einer Innenfläche der Brennkammer 12 angeordnet und mündet in den stromabwärts der Ausgangsfläche 62 der Katalysatorkammer 52 angeordneten Gesamtverbrennungsabschnitt 64. In der hier gezeigten Ausführungsform des Raketenantriebssystems 10 ist die Außenfläche des Zündsystems 18 durch eine dem Kühlmittelkanal 72 zugewandte Außenfläche einer äußeren Katalysatorkammerwand 74 gebildet. Der Kühlmittelkanal 72 ist hier in Form eines zwischen der Außenfläche des Zündsystems 18 und der Innenfläche der Brennkammer 12 definierten Ringspalts ausgebildet. Alternativ kann der Kühlmittelkanal 72 eine Mehrzahl von Kühlmitteleinzelleitungen umfassen, die sich zwischen der Außenfläche des Zündsystems 18 und der Innenfläche der Brennkammer 12 erstrecken. Die Mehrzahl von Kühlmitteleinzelleitungen kann derart ausgebildet sein, dass das in den Gesamtverbrennungsabschnitt 64 zu leitende Kühlmittel in Drall versetzt wird. So kann die Verweilzeit des Kühlmittels an der Innenfläche der Brennkammerwand 12 erhöht und dadurch die durch das Kühlmittel in der Brennkammer 12 bereitgestellte Kühlfunktion verbessert werden.

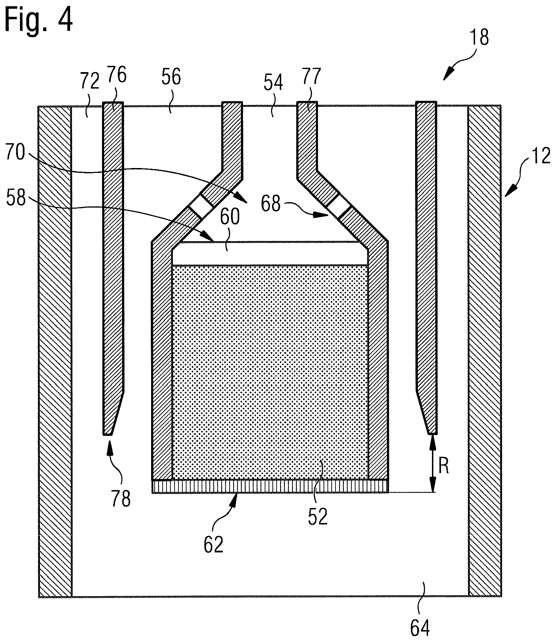

In Fig. 4 ist eine Brennkammer 12 einer zweiten Ausführungsform des Raketenantriebssystems 10 gezeigt. Gegenüber der in Fig. 3 gezeigten Ausführungsform weist das hier gezeigte Zündsystem 18 einen Sauerstoffzufuhrkanal 56 auf, der die Katalysatorkammer 52 zumindest abschnittsweise umschließt. Mit anderen Worten, der hier gezeigte Sauerstoffzufuhrkanal 56 weist einen ringförmigen Querschnitt auf, der von der Katalysatorkammer 52 durchsetzt ist. Entsprechend ist die Außenfläche des Zündsystems 18, entlang derer sich der Kühlmittelkanal 72 erstreckt, durch eine dem Kühlmittelkanal 72 zugewandte Außenfläche einer Sauerstoffzufuhrkanalwand 76 gebildet. Alternativ kann das Zündsystem 18 eine Mehrzahl von Sauerstoffeinzelleitungen umfassen, die dazu eingerichtet ist, den der Brennkammer 12 zugeführten Sauerstoff in die Katalysatorkammer 52 und den Gesamtverbrennungsabschnitt 64 in der Brennkammer 12 zu leiten. Die Mehrzahl der Sauerstoffeinzelleitungen kann entlang einer äußeren Katalysatorkammerwand verlaufen.
Die Sauerstoffzufuhröffnung 68 ist hier in einer äußeren Katalysatorkammerwand 77 ausgebildet. Wie in Figur 4 gezeigt, ist ein dem Gesamtverbrennungsabschnitt 64 zugewandter Endabschnitt 78 der Sauerstoffzufuhrkanalwand 76 um ein Recessmaß R in Strömungsrichtung versetzt zu der Ausgangsfläche 62 der Katalysatorkammer 52 angeordnet. Mit anderen Worten, der Endabschnitt 78 der Sauerstoffzufuhrkanalwand 76 ist in Strömungsrichtung vor der Ausgangsfläche 62 der Katalysatorkammer 52 angeordnet. Alternativ kann der Endabschnitt 78 der Sauerstoffzufuhrkanalwand 76 in Strömungsrichtung hinter der Ausgangsfläche 62 der Katalysatorkammer 52 oder ohne Versatz zu dieser, d.h. mit einem Recessmaß R gleich 0, angeordnet sein. Im Bereich des Endabschnitts 78 der Sauerstoffzufuhrkanalwand 76 weist der Sauerstoffzufuhrkanal 56 einen in Strömungsrichtung größer werdenden Strömungsquerschnitt auf. Im Speziellen ist eine Innenfläche der Sauerstoffzufuhrkanalwand 76 im Bereich des Endabschnitts 78 in einer von der Katalysatorkammer 52 abgewandten Richtung geneigt ausgebildet. Dadurch kann eine Vermischung des den Sauerstoffzufuhrkanal 56 durchströmenden Sauerstoffs mit dem den Kühlmittelkanal 72 durchströmenden Kühlmittel in dem Gesamtverbrennungsabschnitt 64 verbessert werden.

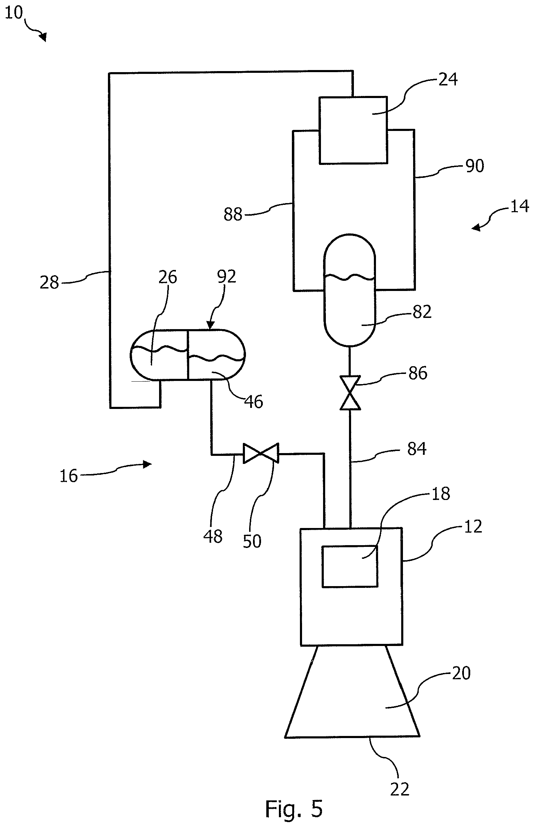

Zum Verständnis der Erfindung ist in Fig. 5 ein Beispiel eines Raketenantriebssystems 10 gezeigt, bei dem das Wasserstoff-Sauerstoff-Zufuhrsystem 14 einen Wasserstoff-Sauerstoff-Gemisch-Speicher 82 zur Speicherung eines Wasserstoff-Sauerstoff-Gemischs umfasst. Eine Wasserstoff-Sauerstoff-Gemisch-Leitung 84 ist dazu eingerichtet, das Wasserstoff-Sauerstoff-Gemisch aus dem Wasserstoff-Sauerstoff-Gemisch-Speicher 82 in die Brennkammer 12 zu leiten. In der Wasserstoff-Sauerstoff-Gemisch-Leitung 84 ist ein Wasserstoff-Sauerstoff-Gemisch-Zufuhrventil 86 bereitgestellt, das zur Steuerung einer Wasserstoff-Sauerstoff-Gemisch-Zufuhr in die Brennkammer 12 eingerichtet ist. Der Wasserstoff-Sauerstoff-Gemisch-Speicher 82 ist über eine Wasserstoffleitung 88 und eine Sauerstoffleitung 90 mit der Elektrolyseeinheit 24 verbunden.
In der hier gezeigten Ausführungsform sind der Kühlmittelspeicher 46 des Kühlmittelzufuhrsystem 18 und der Wasserspeicher 26 des Wasserstoff-Sauerstoff-Zufuhrsystems 14 in einem gemeinsamen Behälter 92 angeordnet.

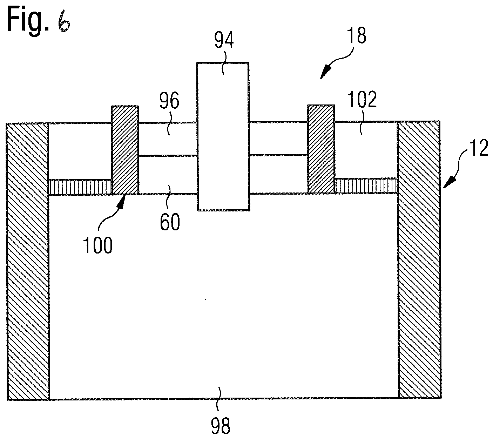

Fig. 6 zeigt einen vergrößerten Längsschnitt der in Fig. 5 gezeigten Brennkammer 12 des Raketenantriebssystems 10. Das Zündsystem 18 umfasst einen Zünder 94 und mindestens einen Zufuhrkanal 96 zur Zufuhr von Wasserstoff und Sauerstoff in einen Gemischverbrennungsabschnitt 98 der Brennkammer 12. Der Zufuhrkanal 96 ist dazu eingerichtet, den der Brennkammer 12 über die Wasserstoffzufuhrleitung 34 zugeführten Wasserstoff und den der Brennkammer 12 über die Sauerstoffzufuhrleitung 42 zugeführten Sauerstoff, wie in Fig. 2 gezeigt, oder das der Brennkammer 12 über die Wasserstoff-Sauerstoff-Gemisch-Leitung 84 zugeführte Wasserstoff-Sauerstoff-Gemisch, wie in Fig. 5 gezeigt, in den Gemischverbrennungsabschnitt 98 zu leiten. Der Zufuhrkanal 96 verläuft im Wesentlichen senkrecht zu einer Eingangsfläche 100 des Gemischverbrennungsabschnitts 98 und mündet im Bereich der Eingangsfläche 100 des Gemischverbrennungsabschnitts 98 in den Gemischverbrennungsabschnitt 98. Wie in Fig. 6 gezeigt, umgibt der Zufuhrkanal 96 den Zünder 94. Mit anderen Worten, der Zufuhrkanal 96 weist einen ringförmigen Querschnitt auf, der von dem Zünder 94 durchsetzt ist. Weiterhin ist im Bereich einer Ausgangsfläche des Zufuhrkanals 96 ein Flammenrückschlagverhinderer 60 angeordnet.
Das Raketenantriebssystem 10 umfasst ferner einen Kühlmittelzufuhrkanal 102, der im Wesentlichen senkrecht zu der Eingangsfläche 100 des Gemischverbrennungsabschnitts 98 verläuft und im Bereich der Eingangsfläche 100 des Gemischverbrennungsabschnitts 98 in den Gemischverbrennungsabschnitt 98 mündet. Der Kühlmittelzufuhrkanal 102 ist zwischen einer Außenfläche des Zündsystems 18 und einer Innenfläche der Brennkammerwand 12 angeordnet.

## Patentansprüche

1. Raketenantriebssystem (10), das umfasst:
- eine Brennkammer (12),
- ein mit der Brennkammer (12) verbundenes Wasserstoff-Sauerstoff-Zufuhrsystem (14), das dazu eingerichtet ist, Wasserstoff und Sauerstoff in die Brennkammer (12) zu leiten,
- ein mit der Brennkammer (12) verbundenes Kühlmittelzufuhrsystem (16), das dazu eingerichtet ist, ein brennbares Kühlmittel in die Brennkammer (12) zu leiten, und
- ein Zündsystem (18), das dazu eingerichtet ist, eine Verbrennung des Wasserstoff-Sauerstoff-Kühlmittel-Gemischs in der Brennkammer (12) zu initiieren,
**dadurch gekennzeichnet, dass**
- das Zündsystem (18) eine in der Brennkammer (12) angeordnete Katalysatorkammer (52), einen Wasserstoffzufuhrkanal (54) und einen Sauerstoffzufuhrkanal (56) umfasst, und
- der Katalysatorkammer (52) über den Wasserstoffzufuhrkanal (54) und den Sauerstoffzufuhrkanal (56) Wasserstoff und Sauerstoff in einem unterstöchiometrischen Mischungsverhältnis zuführbar sind,
wobei in der Brennkammer (12) stromabwärts einer Ausgangsfläche (62) der Katalysatorkammer (52) ein Gesamtverbrennungsabschnitt (64) vorgesehen ist, dem aus der Katalysatorkammer (52) austretende Gase, den Sauerstoffzufuhrkanal (56) durchströmender Sauerstoff und über das Kühlmittelzufuhrsystem (16) in die Brennkammer (12) zugeführtes Kühlmittel zuführbar sind.

2. Raketenantriebssystem nach Anspruch 1,
wobei das Kühlmittel einen flüssigen Brennstoff, insbesondere aus der Gruppe der Alkohole, und/oder ein Flüssiggas, insbesondere aus der Gruppe der Alkane und/oder der Alkene und/oder der Alkine, enthält.

3. Raketenantriebssystem nach Anspruch 1 oder 2,
wobei das Wasserstoff-Sauerstoff-Zufuhrsystem (14) umfasst:
- eine Elektrolyseeinheit (24), die dazu eingerichtet ist, aus einem Wasserspeicher (26) über eine Wasserleitung (28) in die Elektrolyseeinheit (24) zugeführtes Wasser durch Elektrolyse in Wasserstoff und Sauerstoff aufzuspalten,
- eine Wasserstoffleitung (30, 88), die dazu eingerichtet ist, den in der Elektrolyseeinheit (24) erzeugten Wasserstoff in die Brennkammer (12) zu leiten, und
- eine Sauerstoffleitung (38, 90), die dazu eingerichtet ist, den in der Elektrolyseeinheit (24) erzeugten Sauerstoff in die Brennkammer (12) zu leiten.

4. Raketenantriebssystem nach Anspruch 1 oder 2,
wobei das Wasserstoff-Sauerstoff-Zufuhrsystem (14) umfasst:
- einen Wasserstoff-Sauerstoff-Gemisch-Speicher (82) zur Speicherung eines Wasserstoff-Sauerstoff-Gemischs, und
- eine Wasserstoff-Sauerstoff-Gemisch-Leitung (84), die dazu eingerichtet ist, das Wasserstoff-Sauerstoff-Gemisch aus dem Wasserstoff-Sauerstoff-Gemisch-Speicher (82) in die Brennkammer (12) zu leiten.

5. Raketenantriebssystem nach einem der Ansprüche 1 bis 4,
wobei das Kühlmittelzufuhrsystem (18) einen Kühlmittelspeicher (46) umfasst, der insbesondere mit dem Wasserspeicher (26) des Wasserstoff-Sauerstoff-Zufuhrsystems (14) in einem gemeinsamen Behälter (92) angeordnet ist,

6. Raketenantriebssystem nach einem der Ansprüche 1 bis 5,
wobei der Wasserstoffzufuhrkanal (54) im Wesentlichen senkrecht zu einer Eingangsfläche der Katalysatorkammer (52) verläuft und im Bereich der Eingangsfläche (58) der Katalysatorkammer (52) in die Katalysatorkammer (52) mündet.

7. Raketenantriebssystem nach einem der Ansprüche 1 bis 6,
wobei sich der Sauerstoffzufuhrkanal (56) entlang einer dem Sauerstoffzufuhrkanal (56) zugewandten Katalysatorkammerwand (66, 77) erstreckt, über eine Sauerstoffzufuhröffnung (68), die in der dem Sauerstoffzufuhrkanal (56) zugewandten Katalysatorkammerwand (66, 77) ausgebildet ist, mit der Katalysatorkammer (52) verbunden ist und insbesondere in den Gesamtverbrennungsabschnitt (64) der Brennkammer (12) mündet.

8. Raketenantriebssystem nach einem der Ansprüche 1 bis 7,
wobei:
- der Sauerstoffzufuhrkanal (56) einen ringförmigen Querschnitt hat, der von der Katalysatorkammer (52) durchsetzt ist, oder
- die Katalysatorkammer (52) einen ringförmigen Querschnitt hat, der von dem Sauerstoffzufuhrkanal (56) durchsetzt ist.

9. Raketenantriebssystem nach einem der Ansprüche 1 bis 8,
das ferner einen Kühlmittelkanal (72) umfasst, der zwischen einer Außenfläche des Zündsystems (18) und einer Innenfläche der Brennkammer (12) angeordnet ist und insbesondere in den stromabwärts der Ausgangsfläche (62) der Katalysatorkammer (52) angeordneten Gesamtverbrennungsabschnitt (64) mündet.

10. Raketenantriebssystem nach Anspruch 9,
wobei der Kühlmittelkanal (72) in Form eines zwischen der Außenfläche des Zündsystems (18) und der Innenfläche der Brennkammer (12) definierten Ringspalts ausgebildet ist oder eine Mehrzahl von Kühlmitteleinzelleitungen umfasst, die sich zwischen der Außenfläche des Zündsystems (18) und der Innenfläche der Brennkammer (12) erstrecken.

11. Verfahren zum Betreiben eines Raketenantriebssystems (10), das umfasst:
- Leiten von Wasserstoff und Sauerstoff in eine Brennkammer (12),
- Leiten eines brennbaren Kühlmittels in die Brennkammer (12) und
- Initiieren einer Verbrennung des Wasserstoff-Sauerstoff-Kühlmittel-Gemischs in der Brennkammer (12)
**dadurch gekennzeichnet, dass**
- ein Zündsystem (18) des Raketenantriebssystems (10) eine in der Brennkammer (12) angeordnete Katalysatorkammer (52), einen Wasserstoffzufuhrkanal (54) und einen Sauerstoffzufuhrkanal (56) umfasst, und
- der Katalysatorkammer (52) über den Wasserstoffzufuhrkanal (54) und den Sauerstoffzufuhrkanal (56) Wasserstoff und Sauerstoff in einem unterstöchiometrischen Mischungsverhältnis zugeführt wird,
wobei in der Brennkammer (12) stromabwärts einer Ausgangsfläche (62) der Katalysatorkammer (52) ein Gesamtverbrennungsabschnitt (64) vorgesehen ist, dem aus der Katalysatorkammer (52) austretende Gase, den Sauerstoffzufuhrkanal (56) durchströmender Sauerstoff und über das Kühlmittelzufuhrsystem (16) in die Brennkammer (12) zugeführtes Kühlmittel zugeführt wird.

## Claims

1. A rocket propulsion system (10), which comprises:
- a combustion chamber (12),
- a hydrogen-oxygen supply system (14) connected to the combustion chamber (12), which system is configured to conduct hydrogen and oxygen into the combustion chamber (12),
- a coolant supply system (16) connected to the combustion chamber (12), which system is configured to supply a combustible coolant to the combustion chamber (12), and
- an ignition system (18), which is configured to initiate combustion of the hydrogen-oxygen-coolant mixture in the combustion chamber (12),
**characterized in that**
- the ignition system (18) comprises a catalyst chamber (52) arranged in the combustion chamber (12), a hydrogen supply duct (54) and an oxygen supply duct (56), and
- the catalyst chamber (52) can be supplied with hydrogen and oxygen in a substoichiometric mixture ratio via the hydrogen supply duct (54) and the oxygen supply duct (56),
wherein an overall combustion section (64) is provided in the combustion chamber (12) downstream of an exit area (62) of the catalyst chamber (52), to which section gases exiting the catalyst chamber (52), oxygen flowing through the oxygen supply duct (56) and coolant supplied to the combustion chamber (12) via the coolant supply system (16) can be supplied.

2. The rocket propulsion system according to claim 1,
wherein the coolant contains a liquid fuel, in particular from the group of alcohols, and/or a liquid gas, in particular from the group of alkanes and/or alkenes and/or alkynes.

3. The rocket propulsion system according to claim 1 or 2,
wherein the hydrogen-oxygen supply system (14) comprises:
- an electrolysis unit (24), which is configured to split water supplied to the electrolysis unit (22) from a water storage facility (26) via a water line (28) into hydrogen and oxygen by electrolysis,
- a hydrogen line (30, 88) which is configured to conduct the hydrogen produced in the electrolysis unit (24) into the combustion chamber (12), and
- an oxygen line (38, 90), which is configured to conduct the oxygen produced in the electrolysis unit (24) into the combustion chamber (12).

4. The rocket propulsion system according to claim 1 or 2,
wherein the hydrogen-oxygen supply system (14) comprises:
- a hydrogen-oxygen mixture storage facility (82) for storing a hydrogen-oxygen mixture, and
- a hydrogen-oxygen mixture line (84), which is configured to conduct the hydrogen-oxygen mixture from the hydrogen-oxygen mixture storage facility (82) into the combustion chamber (12).

5. The rocket propulsion system according to anyone of claims 1 to 4,
wherein the coolant supply system (16) comprises a coolant storage facility, which is arranged in particular with the water storage facility of the hydrogen-oxygen supply system (14) in a common container.

6. The rocket propulsion system according to anyone of claims 1 to 5,
wherein the hydrogen supply duct (54) runs in particular substantially perpendicular to an entrance area of the catalyst chamber (52) and opens into the catalyst chamber (52) in the region of the entrance area (58) to the catalyst chamber (52).

7. The rocket propulsion system according to anyone of claims 1 to 6,
wherein the oxygen supply duct (56) extends along a catalyst chamber wall (66, 77) facing the oxygen supply duct (56), is connected to the catalyst chamber (52) via an oxygen supply opening (38), which is formed in the catalyst chamber wall (66, 77) facing the oxygen supply duct (56) and opens in particular into the overall combustion section (64) of the combustion chamber (12).

8. The rocket propulsion system according to anyone of claims 1 to 7,
wherein:
- the oxygen supply duct (56) has an annular cross section, through which the catalyst chamber (52) passes, or
- the catalyst chamber (52) has an annular cross section, through which the oxygen supply duct (56) passes.

9. The rocket propulsion system according to anyone of claims 1 to 8,
which further comprises a coolant duct (72), which is arranged between an outer surface of the ignition system (18) and an inner surface of the combustion chamber (12) and in particular opens into the overall combustion section (64) arranged downstream of the exit area (62) of the catalyst chamber (52).

10. The rocket propulsion system according to claim 9,
wherein the coolant duct (72) is formed in the form of an annular gap defined between the outer surface of the ignition system (18) and the inner surface of the combustion chamber (12) or comprises a plurality of coolant single lines, which extend between the outer surface of the ignition system (18) and the inner surface of the combustion chamber (12).

11. A method for operating a rocket propulsion system (10), which comprises:
- conducting of hydrogen and oxygen into a combustion chamber (12),
- conducting of a combustible coolant into the combustion chamber (12) and
- initiation of combustion of the hydrogen-oxygen-coolant mixture in the combustion chamber (12),
**characterized in that**
- an ignition system (18) of the rocket portion system (10) comprises a catalyst chamber (52) arranged in the combustion chamber (12), a hydrogen supply duct (54) and an oxygen supply duct (56), and
- the catalyst chamber (52) is supplied with hydrogen and oxygen in a substoichiometric mixture ratio via the hydrogen supply duct (54) and the oxygen supply duct (56),
wherein an overall combustion section (64) is provided in the combustion chamber (12) downstream of an exit area (62) of the catalyst chamber (52), to which section gases exiting the catalyst chamber (52), oxygen flowing through the oxygen supply duct (56) and coolant supplied to the combustion chamber (12) via the coolant supply system (16) is supplied.

## Revendications

1. Système de propulsion de fusée (10), comprenant :
- une chambre de combustion (12),
- un système d'alimentation en hydrogène et oxygène (14) relié à la chambre de combustion (12), agencé pour conduire de l'hydrogène et de l'oxygène à la chambre de combustion (12),
- un système d'alimentation en fluide de refroidissement (16) relié à la chambre de combustion (12), agencé pour conduire un fluide de référence combustible à la chambre de combustion (12), et
- un système d'allumage (18) agencé pour amorcer une combustion du mélange d'hydrogène, d'oxygène et de fluide de refroidissement dans la chambre de combustion (12),
**caractérisé en ce que**
- le système d'allumage (18) comprend une chambre de catalyseur (52) disposée dans la chambre de combustion (12), un conduit d'alimentation en hydrogène (54) et un conduit d'alimentation en oxygène (56), et
- de l'hydrogène et de l'oxygène avec un rapport de mélange sous-stoechiométrique peuvent être alimentés dans la chambre de catalyseur (52) à travers le conduit d'alimentation en hydrogène (54) et le conduit d'alimentation en oxygène (56),
une section de combustion totale (64) étant prévue dans la chambre de combustion (12) en aval d'une surface de sortie (62) de la chambre de catalyseur (52), dans laquelle peuvent être alimentés des gaz sortant de la chambre de catalyseur (52), de l'oxygène passant par le conduit d'alimentation en oxygène (56) et du fluide de refroidissement alimenté dans la chambre de combustion (12) à travers le système d'alimentation en fluide de refroidissement (16).

2. Système de propulsion de fusée selon la revendication 1, dans lequel le fluide de refroidissement contient un combustible liquide, en particulier issu du groupe des alcools, et/ou un gaz liquide, en particulier issu du groupe des alcanes et/ou des alcènes et/ou des alcynes.

3. Système de propulsion de fusée selon les revendications 1 ou 2, dans lequel système d'alimentation en hydrogène et oxygène (14) comprend :
- une unité d'électrolyse (24) agencée pour décomposer par électrolyse de l'eau alimentée dans l'unité d'électrolyse (24) par une conduite d'eau (28) en hydrogène et oxygène,
- une conduite d'hydrogène (30, 88) agencée pour conduire l'hydrogène produit dans l'unité d'électrolyse (24) dans la chambre de combustion (12), et
- une conduite d'oxygène (38, 90), agencée pour conduire l'oxygène produit dans l'unité d'électrolyse (24) dans la chambre de combustion (12).

4. Système de propulsion de fusée selon les revendications 1 ou 2, dans lequel le système d'alimentation en hydrogène et oxygène (14) comprend :
- un réservoir pour mélange d'hydrogène et d'oxygène (82) pour stocker un mélange d'hydrogène et d'oxygène, et
- une conduite de mélange d'hydrogène et d'oxygène (84), agencée pour conduire le mélange d'hydrogène et d'oxygène (82) dans la chambre de combustion (12).

5. Système de propulsion de fusée selon l'une quelconque des revendications 1 à 4, dans lequel le système d'alimentation en fluide de refroidissement (18) comprend un réservoir de fluide de refroidissement (46) disposé en particulier dans un conteneur (92) commun avec le réservoir d'eau (26) du système d'alimentation en hydrogène et oxygène (1).

6. Système de propulsion de fusée selon l'une quelconque des revendications 1 à 5, dans lequel le conduit d'alimentation en hydrogène (54) s'étend substantiellement perpendiculairement à une surface d'entrée de la chambre de catalyseur (52) et débouche dans la chambre de catalyseur (52) au niveau de la surface d'entrée (58) de la chambre de catalyseur (52).

7. Système de propulsion de fusée selon l'une quelconque des revendications 1 à 6, dans lequel le conduit d'alimentation en oxygène (56) s'étend le long d'une paroi de chambre de catalyseur (66, 77) tournée vers le conduit d'alimentation en oxygène (56), est relié à la chambre de catalyseur (52) à travers une ouverture d'alimentation en oxygène (68) réalisée dans la paroi de chambre de catalyseur (66, 77) tournée vers le conduit d'alimentation en oxygène (56), et débouche en particulier dans la section de combustion totale (64) de la chambre de combustion (12).

8. Système de propulsion de fusée selon l'une quelconque des revendications 1 à 7, dans lequel :
- le conduit d'alimentation en oxygène (56) présente une section transversale annulaire traversée par la chambre de catalyseur (52), ou
- la chambre de catalyseur (52) présente une section transversale annulaire traversée par le conduit d'alimentation en oxygène (56).

9. Système de propulsion de fusée selon l'une quelconque des revendications 1 à 8, comprenant en outre un conduit de fluide de refroidissement (72) disposé entre une surface extérieure du système d'allumage (18) et une surface intérieure de la chambre de combustion (12) et débouchant en particulier dans la section de combustion totale (64) disposée en aval de la surface de sortie (62) de la chambre de catalyseur (52).

10. Système de propulsion de fusée selon la revendication 9, dans lequel le conduit de fluide de refroidissement (72) est réalisé sous la forme d'une fente annulaire définie entre la surface extérieure du système d'allumage (18) et la surface intérieure de la chambre de combustion (12) ou comprend une pluralité de conduites individuelles de fluide de refroidissement s'étendant entre la surface extérieure du système d'allumage (18) et la surface intérieure de la chambre de combustion (12).

11. Procédé d'exploitation d'un système de propulsion de fusée (10), comprenant les étapes consistant à :
- conduire de l'hydrogène et de l'oxygène à une chambre de combustion (12),
- conduire un fluide de refroidissement combustible à la chambre de combustion (12), et
- amorcer une combustion du mélange d'hydrogène, d'oxygène et de fluide de refroidissement dans la chambre de combustion (12),
**caractérisé en ce que**
- un système d'allumage (18) du système de propulsion de fusée (10) comprend une chambre de catalyseur (52) disposée dans la chambre de combustion (12), un conduit d'alimentation en hydrogène (54) et un conduit d'alimentation en oxygène (56), et
- de l'hydrogène et de l'oxygène avec un rapport de mélange sous-stoechiométrique peuvent être alimentés dans la chambre de catalyseur (52) à travers le conduit d'alimentation en hydrogène (54) et le conduit d'alimentation en oxygène (56),
une section de combustion totale (64) étant prévue dans la chambre de combustion (12) en aval d'une surface de sortie (62) de la chambre de catalyseur (52), dans laquelle sont alimentés des gaz sortant de la chambre de catalyseur (52), de l'oxygène passant par le conduit d'alimentation en oxygène (56) et du fluide de refroidissement alimenté dans la chambre de combustion (12) à travers le système d'alimentation en fluide de refroidissement (16).
